(19) Europäisches Patentamt
European Patent Office
Office européen des brevets

(11) **EP 4 723 138 A1**

(12) **EUROPEAN PATENT APPLICATION**

(43) Date of publication:
08.04.2026 Bulletin 2026/15

(21) Application number: 24204100.2

(22) Date of filing: 02.10.2024

(51) International Patent Classification (IPC):
*H01B 1/24* (2006.01)     *C08K 3/04* (2006.01)
*C08L 75/04* (2006.01)     *C09D 5/24* (2006.01)

(52) Cooperative Patent Classification (CPC):
(C-Sets available)
**H01B 1/24; C08K 3/04; C08L 75/04; C09D 5/24;
C09D 7/61; C09D 175/04;** C08K 2201/00;
C08K 2201/001     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Henkel AG & Co. KGaA
40589 Düsseldorf (DE)**

(72) Inventors:
• **Goethel, Frank
09125 Chemnitz (DE)**
• **Gillissen, Stijn
3500 Hasselt (BE)**
• **Matthijssen, Tjalle
9736TN Groningen (NL)**
• **Taplan, Christian
40225 Düsseldorf (DE)**

(54) **ELECTRICALLY CONDUCTIVE COMPOSITION**

(57)     The present invention relates to an electrically conductive composition comprising a) carbon black; b) a water-soluble thermoplastic polymer; c) a polyurethane polymer water dispersion having polyurethane polymer content from 35 to 45 wt.%; d) a defoamer; e) a rheology modifier; f) a preservative; and g) water. The electrically conductive composition can be used in a moisture sensor and/or water leak detection system.

**EP 4 723 138 A1**

(52) Cooperative Patent Classification (CPC): (Cont.)

C-Sets
**C08K 3/04, C08L 75/04, C08L 39/06;**
**C09D 175/04, C08L 39/06, C08K 3/04**

## Description

Technical field of the invention

The present invention relates to an electrically conductive composition, which can be used in a moisture sensor and/or water leak detection system.

Background of the invention

Undetected water leaks in floors, walls, roofs and pipelines are a major problem in buildings. It is expensive, time consuming and difficult to locate the water leaks especially on a large surface, and therefore, such leaks stay often unnoticed while damaged area expands. Consequently, resulting water damages often cause high repair costs, disruption of the intended use and possibly a reduced lifetime of the building.

General printed water leak detection sensors are made of standard electrically conductive inks, however, these inks are not sensitive to water themselves. These resistive sensors contain two separate electrically conductive tracks printed onto a surface of a substrate. Typically, separately printed tracks will become connected in the presence of water, and a signal will be read out by a hardware and software. However, these sensors hardly provide any information about the volume of the detected leak, and in addition, they do not react to moisture and/or humidity. The relative position and dimension of the water leak can be detected by the design of the sensor; however, these sensors are limited to small area leak detection only. The printed track dimensions limit the size of these sensors, because larger areas will suffer from insufficient track conductivity.

One approach has been to modify the standard electrically conductive inks with hygroscopic polymers to attract and bind water molecules. When hygroscopic polymers are in contact with water they will swell or fully dissolve, and therefore, the conductivity of the printed layer is reduced or disrupted. However, high quantities of hygroscopic polymers are required in the electrically conductive ink composition to get a significant response to water. Furthermore, such hygroscopic polymers are typically not soluble in organic solvents, and therefore are dispersed as a powder in solvent-based inks which will reduce overall electrical conductivity and adhesion properties. Moreover, the printed tracks become very sensitive to humidity and/or moisture, which can lead to unintended changes in conductivity and loss of adhesion properties over time.

Another approach has been to impregnate an absorbent substrate e.g., as non-woven or foam with a standard electrically conductive ink. The manufacturing process consumes high quantities of electrically conductive inks, nevertheless, the overall electrical conductivity of these impregnated substrates is relatively low. The impregnated absorbent substrate will absorb water which will disturb the contact points of the conductive particles, and therefore, causing a decreased conductivity.

Another approach has been to use an electrically conductive ink composition comprising graphene particles dispersed in a solvent or an acrylic binder. Subsequently the ink has been bar coated or spray coated onto a non-woven substrate. Once the dried ink composition layer is in contact with water, electrical conductivity of the ink layer will decrease. Graphene is a two-dimensional single layer particle, with an ultra-high specific surface area, and therefore it may be challenging to disperse it homogenously when formulating an ink, especially when no other electrically conductive particles are used to form a blend. This will lead to high deviation in electrical conductivity of the dry ink layer.

Therefore, there remains a need to provide a moisture and water sensing ink composition which enables manufacturing of a low-cost but effective and reliable moisture and/or water sensing coating.

Summary of the invention

The present invention relates to an electrically conductive composition comprising a) carbon black; b) a water-soluble thermoplastic polymer; c) a polyurethane polymer water dispersion having polyurethane polymer content from 35 to 45 wt.%; d) a defoamer; e) a rheology modifier; f) a preservative; and g) water.

The present invention also relates to a dry film formed from the electrically conductive composition according to the present invention.

The present invention encompasses an electrically conductive substrate comprising a) the electrically conductive composition according to the present invention; and b) a substrate, wherein the electrically conductive composition applied on to a surface of the substrate, wherein the substrate is preferably selected from the group consisting of a plastic, a woven geotextile fabric, a non-woven geotextile fabric, a knitted fabric, a laid fabric and a woven tape.

The present invention also encompasses a moisture sensor and/or water leak detection system comprising the electrically conductive substrate according to the present invention.

Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified. For the completeness the term "comprising" encompasses "consisting of".

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, an upper limit or a preferable upper limit value and a lower limit or a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein, the term *"leak detection"* refers to a method used to detect and monitor the presence of gases or liquids and inform about a leak incident.

The molecular weights referred to in this specification can be measured with gel permeation chromatography (GPC) using polystyrene calibration standards, such as is done according to ASTM 3536.

The definition *"electrically conductive"* characterizes components having a volume electrical conductivity at room temperature of at least $1 \times 10^5$ Sm$^{-1}$. The term *"electrically non-conductive"* as used herein references a material having a volume electrical conductivity of less than 1 Sm$^{-1}$, typically less than $1 \times 10^{-5}$ Sm$^{-1}$ or less than $1 \times 10^{-8}$ Sm$^{-1}$. The terms *"volume electrical conductivity"* is herein used in accordance with its standard meaning given in ASTM D1711-22 *Standard Terminology Relating to Electrical Insulation.* Electrical conductivity may be measured in accordance with ASTM 257-14 (2021) *Standard Test Methods for DC Resistance or Conductance of Insulating Materials.*

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to an electrically conductive composition comprising a) carbon black; b) a water-soluble thermoplastic polymer; c) a polyurethane polymer water dispersion having a polyurethane polymer content from 35 to 45 wt.%; d) a defoamer; e) a rheology modifier; f) a preservative; and g) water.

The Applicant has found out that water-based electrically conductive ink compositions having only carbon black as electrically conductive material allow simple ink composition manufacturing and a low-cost, large-scale device fabrication using high speed printing and coating techniques.

Further the Applicant has found out that the dry film formed from the electrically conductive composition according to the present invention provides good water wettability and changes its electrical properties once in contact with moisture and/or water while remaining water resistant. The quick response to moisture and/or water is independent to the used substrate.

The electrically conductive composition according to the present invention comprises carbon black. Carbon black provides electrical conductivity for the composition.

The composition according to the present invention does not contain graphene, graphite or carbon nanotubes (CNT).

Suitable carbon black for use in the present invention has preferably an oil absorption number from 70 ml/100g to 500 ml/100g, more preferably from 100 ml/100g to 300 ml/100g and more preferably from 150 ml/100g to 200 ml/100g, wherein said oil absorption number is measured according to ASTM D2414.

In addition to oil absorption number, or as an alternative feature suitable carbon black for use in the present invention has a specific surface area preferably from 30 $m^2$/g to 1400 $m^2$/g, more preferably from 100 $m^2$/g to 700 $m^2$/g and more preferably from 150 $m^2$/g to 350 $m^2$/g, wherein said specific surface area is measured according by BET. The method is based on the registration of the absorption of nitrogen at 77K. Following the model proposed by Brunauer, Emmet and Teller (BET), the monolayer capacity can be determined. On the basis of the cross-sectional area of the nitrogen molecule, the monolayer capacity and the weight of the sample, the specific surface can then be calculated.

In a preferred embodiment carbon black has an oil absorption number from 70 ml/100g to 500 ml/100g, preferably from 100 ml/100g to 300 ml/100g and more preferably from 150 ml/100g to 200 ml/100g, and/or a specific surface area from 30 $m^2$/g to 1400 $m^2$/g, preferably from 100 $m^2$/g to 700 $m^2$/g and more preferably from 150 $m^2$/g to 350 $m^2$/g, wherein said oil absorption number is measured according to ASTM D2414, and wherein said specific surface area is measured according by BET.

Preferred specific surface areas and oil absorption numbers independently or as a combination provide good printing properties and low resistance in thin layers.

When the oil absorption number of carbon black is too low, it means less branched carbon black, and therefore, there may be fewer contact points in thin layers, and this may lead to adversely affect conductivity, whereas too high oil absorption number of carbon black, mainly greater than 500, may cause difficulties in printing process.

When the specific surface area size of carbon black is too small, mainly less than 30, this may lead to a poor conductivity, whereas too high specific surface area of carbon black, mainly more than 1400, may lead difficulties in printing process.

Suitable commercially available carbon black for use in the present invention include but is not limited to Vulcan XC72 from Cabot, Monarch 280 from Cabot and Ensaco 250G from Imerys.

Carbon black may be present in the electrically conductive composition according to the present invention in a quantity from 5 to 25% by weight of the total weight of the composition, preferably from 7 to 20% and more preferably from 8 to 15%.

When the quantity of carbon black is too low, mainly less than 5%, the quantity may not provide desired conductivity, whereas too high quantity, mainly more than 25%, may lead to difficulties in processability by standard coating or printing techniques.

The electrically conductive composition according to the present invention comprises a water-soluble thermoplastic polymer. The water-soluble thermoplastic polymer reduces the size of suspended carbon black particles and has an impact to rheological and electrical properties of the composition.

Suitable water-soluble thermoplastic polymer for use in the present invention may be selected from the group consisting of polyethylene oxide (PEO), polyvinyl pyrrolidone (PVP), polyvinyl alcohol (PVA), polyacrylamide (PAM), polyethylene glycol (PEG), polyacrylic acid (PAA), and mixtures thereof, preferably the water-soluble thermoplastic polymer is polyvinyl pyrrolidone (PVP).

Polyvinyl pyrrolidone is particularly preferred, because addition of polyvinyl pyrrolidone significantly reduces the size of suspended carbon black particles, leading to a more homogenous and stable dispersion of the composition.

Suitable commercially available water-soluble thermoplastic polymer for use in the present invention include but is not limited to PVP K-12, PVP K-15 from Ashland and Luviskol K 17 and Luviskol K 30 from BASF.

The water-soluble thermoplastic polymer may be present in the electrically conductive composition according to the present invention in a quantity from 1 to 10% by weight of the total weight of the composition, preferably from 1.5 to 8% and more preferably from 2 to 6%.

When the quantity of the water-soluble thermoplastic polymer exceeds 10%, the viscosity of the composition may increase to the level that the composition is no longer processable by standard coating or printing techniques and that the final dry film gets fully dissolved by water, whereas too low quantity, mainly less than 1% may lead to a poor dispersion of carbon black and settling of carbon black in the composition over time.

The electrically conductive composition according to the present invention comprises a polyurethane polymer water dispersion having polyurethane polymer content from 35 to 45 wt.%. The polyurethane polymer is added into the composition as a polyurethane water dispersion due to compatibility reasons.

Polyurethane water dispersion is understood to be a polyurethane polymer resin dispersed in water.

The polyurethane polymer has an impact on mechanical and adhesion properties, as well as on water wettability and water resistance of the dried composition.

Suitable polyurethane polymer for use in the present invention may be selected from the group consisting of an aromatic polyether polyurethane, an aliphatic polyether polyurethane, an aromatic polyester polyurethane, an aliphatic polyester polyurethane, an aromatic polycaprolactam polyurethane, an aliphatic polycaprolactam polyurethane, an aliphatic polyester-polycarbonate polyurethane, a vinyl-urethane hybrid polymer, an acrylic-urethane hybrid polymer, and mixtures thereof, preferably the polyurethane polymer is an aliphatic polyether polyurethane.

The aliphatic polyether polyurethane is preferred because it provides excellent wettability of water (hydrophilic surface).

Preferably the molecular weight (Mw) of the polyurethane polymer is from 10000 to 500000, more preferably >200000 g/mol. Molecular weight can be measured with gel permeation chromatography (GPC) using polystyrene calibration standards, such as is done according to ASTM 3536.

Preferred molecular weight provide good mechanical and film forming properties.

Preferably the viscosity of the polyurethane polymer at room temperature is in the range of 20 - 500 mPa·s. Viscosity can be measured on a Rheometer from TA instruments Rheometer HR-1 or Q-2000 using a plate-plate geometry with a 2 cm in diameter plate at a 200 $\mu$m gap and shear rates of 1.5 s-1 or 15 s-1.

The solid content of the water dispersion is from 35 to 45%, and the pH value is preferably from 7.0 to 9.0 and the minimum film-forming temperature (MFFT) is preferably less than 40 °C.

Suitable commercially available polyurethane water dispersions for use in the present invention include but are not limited to Joncryl FLX 5201 from BASF, and Liopur PFL 1154, Liopur PFL 2392 and Liopur PKS 2845 from SYNTHOPOL CHEMIE.

The polyurethane polymer water dispersion may be present in the electrically conductive composition according to the present invention in a quantity from 5 to 50% by weight of the total weight of the composition, preferably from 10 to 40%, and more preferably from 12 to 30%.

When the quantity of the polyurethane polymer water dispersion exceeds 50% the electrical conductivity of the composition may be too low, whereas too low quantity, mainly less than 5%, may lead to a poor water resistance as well as poor mechanical and adhesion properties of the dried.

The electrically conductive composition according to the present invention comprises a defoamer. The defoamer improves the substrate wetting performance and avoid surface defects of water-based inks by reducing dynamic surface tension and breaking the foam of the composition.

Suitable defoamer for use in the present invention may be selected from the group consisting of 2,4,7,9-tetramethyl-5-decin-4,7-diol, polydimethylsiloxane, modified polydimethylsiloxane, mineral oil based defoamer, native oil based defoamer, and non-ionic surfactants based defoamer, and mixtures thereof.

Suitable commercially available defoamers for use in the present invention include but are not limited to BYK-012, BYK-016 and BYK-024 from BYK, and FOAMASTER MO 2140, FOAMASTER NO 2306 and FOAMASTER WO 2323 from BASF.

The defoamer may be present in the electrically conductive composition according to the present invention in a quantity from 0.1 to 3% by weight of the total weight of the composition, preferably from 0.25 to 2%, and more preferably from 0.5 to 1.75%.

When the quantity of the defoamer exceeds 3% there may not be any significant performance improvement compared to lower quantities, whereas too low quantity, mainly less than 0.1% may not improve substrate wetting and not prevent foam formation of the composition.

The electrically conductive composition according to the present invention comprises a rheology modifier.

Suitable rheology modifier for use in the present invention may be selected from the group consisting of hydroxyethyl cellulose (HEC), hydroxypropyl cellulose (HPC), hydroxyethyl methylcellulose (HEMC), hydroxypropyl methyl cellulose (HPMC), methyl cellulose (MC), ethyl cellulose (EC), and mixtures thereof, preferably the rheology modifier is hydroxyethyl cellulose (HEC).

Cellulose derivatives are preferred because they are water-soluble, and act as thickener which stabilises carbon black dispersion without sedimentation of the composition.

Suitable commercially available rheology modifiers for use in the present invention include but are not limited to Admiral, Ecodura, Natrosol, Klucel H, Benecel, Culminal, and Aqualon from Ashland and Celopro form Celotech.

The rheology modifier may be present in the electrically conductive composition according to the present invention in a quantity from 0.01 to 0.5% by weight of the total weight of the composition, preferably from 0.02 to 0.2% and more preferably from 0.05 to 0.15%.

These quantities are preferred because too low quantities, mainly less than 0.01, may not provide performance improvement, whereas too high quantities, mainly more than 0.5%, may lead too high viscosity and thixotropy, and therefore the composition cannot anymore be processed by standard coating or printing techniques.

The electrically conductive composition according to the present invention comprises a preservative. The preservative is used to prevent growth of bacteria, mould and yeast in the water-based composition.

Suitable preservatives for use in the present invention may be selected from the group consisting of 1,2-benzisothiazolin-3-one, 1,2-benzisothiazolin-3-one sodium salt, 2-methyl-2H-isothiazol-3-one, 5-chlor-2-methyl-2H-isothiazol-3-on, 5-chloro-2-methyl-1,2-thiazol-3(2H)-one, tris(hydroxymethyl)nitromethane, o-phenylphenol, o-phenylphenol sodium salt, dimethoxane, didecyldimethyl ammonium chloride, 2-brom-2-nitro-1,3-propandiol, 1,2-butanediol, 1,2-ocatanediol, 1,2-heptanediol, AgCl on TiO2, NaOPP / NaBIT, and mixtures thereof.

The above listed preservatives are preferred because they are water-soluble or miscible with water.

Suitable commercially available preservatives for use in the present invention include but are not limited to Acticide BW 20 from Thor, Barbac 2240, BIOBAN BP-30 and BIOBAN DXN from Lanxess, Hydrolite 8 and Hydrolite 7 from Symrise, JMAC LP 10 from Clariant, and Mergal KM 90 from Troy Corporation.

The preservative may be present in the electrically conductive composition according to the present invention in a quantity from 0.001 to 0.5% by weight based on the total weight of the composition, preferably from 0.01 to 0.4% and more preferably from 0.02 to 0.3%

The above quantities are preferred because too low quantities, mainly less than 0.001, may not prevent growth of a bacteria, a mould and an yeast in the composition over a long period of time, whereas too high quantities, mainly more than 0.5%, may lead to high toxicity, high sensitisation and negative environmental impact without any additional technical benefit.

The electrically conductive composition according to the present invention is a water-based composition, and therefore, the composition comprises water.

Preferably the water is deionised water. Deionised water is preferred to avoid any contamination which may have a negative impact to electrical conductivity of the dried composition.

Water-based compositions involve very low or no volatile organic compounds (VOC), and therefore, provide health and safety benefits by avoiding toxic and flammable solvents. In addition, water-based compositions are considered to have a lower environmental impact when compared to solvent-based compositions.

Water may be present in the electrically conductive composition according to the present invention in a quantity from 40 to 80% by weight of the total weight of the composition, preferably from 45 to 75%, and more preferably from 50 to 70%.

It is noted that the above water quantities are excluding water coming into the composition in the polyurethane polymer water dispersion.

The defined water content in the composition according to present invention provide good viscosity to the composition.

Ammonia may be used to adjust the pH of the electrically conductive composition according to the present invention. In a preferred embodiment ammonia (25% solution in water) may be used to increase the pH of the composition.

Preferably, the pH is about 9. The Applicant has found out that a higher pH allows to increase the amount of carbon black in the composition without adversely affecting other properties.

A pH value can be measured by using potentiometric methods by using the electrical potential of pH-sensitive electrodes as a measurement signal, which is then displayed by a pH meter.

A water-soluble ionic compound may be used to adjust moisture and/or water response rate of the composition according to the present invention.

Suitable examples of water-soluble ionic compounds for use in the present invention are sodium chloride (NaCl), and potassium chloride (KCl).

Alternatively, a hygroscopic ionic compound may also be used to increase moisture and/or water response.

The electrically conductive composition according to the present invention is preferably prepared by a pebble mill process. In the pebble mill process carbon black, a water-soluble thermoplastic polymer, a polyurethane polymer water dispersion, a defoamer, a rheology modifier, a preservative and water are being homogenised by pebbles for about 15 hours in a large mill.

The present invention relates to a dry film formed from the electrically conductive composition according to the present invention.

The dry film may contain one or more layers of the electrically conductive composition according to the present invention. Single layer may have a wet thickness from 4.5 to 800 μm, preferably from 6 μm to 400 μm, and more preferably from 15 to 200 μm.

The composition layer is subsequently dried for 0.5 to 15 minutes at 60 to 150 °C in a box oven or in a conveyor oven or by using a near infrared (NIR) heating module to form a dry film.

Single layer may have a dry thickness from 0.5 to 200 μm, preferably from 2 to 100 μm, and more preferably from 5 to 50 μm.

The present invention also relates to a conductive substrate comprising a) the electrically conductive composition according to the present invention; and b) a substrate, wherein the electrically conductive composition is applied and thermally dried on to a surface of the substrate.

Suitable substrate for use in the present invention may be selected from the group consisting of a plastic, a woven geotextile fabric, a non-woven geotextile fabric, a knitted fabric, a laid fabric and a woven tape.

Some specific examples of the suitable substrates in addition to geotextiles may be a mulch mat, non-woven and woven fleece and felt, substrates made from natural fibres (e.g., wool and hairs) or polymer fibres (e.g., polyester and polypropylene) and polymer foils (e.g., polyester and polypropylene).

Suitable commercially available substrates for use in the present invention include but are not limited to geotextiles from Solmax Geosynthetics GmbH and Huesker Synthetic GmbH, and polyester foils from MacDermid and DuPont.

The electrically conductive composition according to the present invention can be applied onto a substrate by bar coating, dip coating, spray coating or printing techniques, especially by high-speed coating and printing techniques.

One or more layers of the electrically conductive composition according to the present invention may be applied onto a surface of the substrate. The thickness of a single wet layer is from 4.5 to 800 $\mu$m, preferably from 6 to 400 $\mu$m, and more preferably from 15 to 200 $\mu$m.

The composition layer(s) is subsequently dried for 0.5 to 15 minutes at 60 to 150 °C in a box oven or in a conveyor oven or by using a near infrared (NIR) heating module.

In a preferred embodiment, the layer is dried for 5 minutes at 100 °C in a box oven.

Once the drying is complete, the dry layer has a thickness from 0.5 to 200 $\mu$m, preferably from 2 to 100 $\mu$m, and more preferably from 5 to 50 $\mu$m.

The electrically conductive composition according to the present invention may cover completely or partially the surface of the substrate. The level of coverage depends on the material of the substrate. For example, non-absorbent plastic substrates such as PET preferably have complete coverage, whereas non-woven substrates are only partial coverage.

The present invention encompasses a moisture sensor and/or water leak detection system comprising the electrically conductive substrate according to the present invention.

The moisture sensor and/or water leak detection system according to present invention further comprise a) hardware connected to conductive substrate, which applies current, measures the resulting voltage and calculates the electrical resistance; and b) software for collecting data and reporting.

The moisture sensor and/or water leak detection system according to the present invention may be used to detect moisture and/or water leak in a roof, in a wall, in a floor and on pipelines.

The moisture sensor and/or water leak detection system according to the present invention enables a permanent monitoring of substrates and early warning alert in case of the present of moisture and/or water. Moreover, it may provide a location of the origin of the moisture and/or water. This will minimize the repair costs and increase lifetime of the building.

Examples

Comparative example 1

LOCTITE ECI 7007 E&C from Henkel AG & Co. KGaA was diluted with n-propyl acetate using a ratio of 1:0.4 by weight. The diluted product was applied with a bar coater onto an untreated PET substrate and dried for 5 minutes at 100°C inside a box oven. The dry layer had a thickness of 10 $\mu$m and a calculated sheet resistance of 12 Ohm$_{sq}$/mil. The resistance of a track with an area of 1 $\times$ 5 cm (width x length) was measured with an multimeter before and after placing 5 droplets of tap water on to the centre of the track. The water had poor wettability on the conductive layer without getting absorbed. The results are listed in table 1 below.

The calculated sheet resistance was calculated as follows:

Sheet resistance in Ohmsq: track resistance * (track width / track length)

Sheet resistance Ohmsq/mil: sheet resistance * (actual dry layer thickness / 25.4 μm)

Table 1

|  | Initial | After 30 seconds | After 60 seconds | After 300 seconds |
|---|---|---|---|---|
| Track resistance (Ohm) | 151.5 | 152.5 | 153.2 | 153.7 |
| Track resistance increase | - | 0.7% | 1.1% | 1.5% |

Comparative example 2

LOCTITE ECI 7007 E&C from Henkel AG & Co. KGaA was diluted with n-propyl acetate using a ratio of 1:0.4 by weight. The diluted product was spray coated onto a non-woven polypropylene substrate and dried for 5 minutes at 100°C, resulting in a dry coating weight of 49 g/m$^2$. The track resistance of an area of 1 × 5 cm (width x length) was measured before and after placing 5 droplets of tap water on to the centre of the track. The water had poor wettability on the conductive layer and was not absorbed by the substrate. The results are listed in table 2 below.

Table 2

|  | Initial | After 30 seconds | After 60 seconds | After 300 seconds |
|---|---|---|---|---|
| Track resistance (Ohm) | 560 | 540 | 539 | 539 |
| Track resistance increase | - | -3.6% | -3.8% | -3.8% |

Comparative example 3

LOCTITE EDAG 109 E&C from Henkel AG & Co. KGaA was diluted with methyl ethyl ketone using a ratio of 1:1 by weight. The diluted product was spray coated onto a non-woven polypropylene substrate and dried for 5 minutes at 100°C, resulting in a dry coating weight of 43 g/m$^2$. The track resistance of an area of 1 × 5 cm (width x length) was measured before and after placing 5 droplets of tap water on to the centre of the track. The water had poor wettability on the conductive layer and was not absorbed by the substrate. The results are listed in table 3 below.

Table 3

|  | Initial | After 30 seconds | After 60 seconds | After 300 seconds |
|---|---|---|---|---|
| Track resistance (Ohm) | 1230 | 1210 | 1210 | 1205 |
| Track resistance increase | - | -1.6% | -1.6% | -2.0% |

Example 1 according to the present invention

A mixture of 77.57 wt.% deionized water, 15.28 wt.% Monarch 280 (carbon black), 5.25 wt.% PVP K-15 (water-soluble thermoplastic polymer), 1.18 wt.% BYK-024 (defoamer additive), 0.3 wt.% Surfynol 104E (defoamer additive), 0.19 wt.% Acticide BW 20 (preservative), 0.12 wt.% ammonia solution 25% (preservative) and 0.1 wt.% Natrosol 250 GR (rheology modifier) was added to a jar containing pebbles as milling media. The closed jar was placed on a roller bench and rolled for 16 hours. Afterwards, the homogenous intermediate 1 was transferred in a separate container without the milling media. 78.5 wt.% of the intermediate 1 and 21.5 wt.% of Joncryl FLX 5201 (polyurethane dispersion in water) was mixed with a propellor mixer at 400 rpm for 15 minutes to form an electrically conductive composition 1.

The electrically conductive composition 1 was spray coated onto a 1.9 mm thick non-woven polypropylene substrate and dried for 5 minutes at 100°C in a box oven, resulting in a dry coating weight of 51 g/m$^2$. The track resistance of an area of 1 × 5 cm (width x length) was measured before and after placing 5 droplets of tap water on to the centre of the track. Within few seconds the water was fully absorbed by the substrate through the conductive layer. The results are listed in table 4 below.

Table 4

|  | Initial | After 30 seconds | After 60 seconds | After 300 seconds |
|---|---|---|---|---|
| Track resistance (Ohm) | 33300 | 105000 | 142000 | 256000 |
| Track resistance increase | - | 215% | 326% | 669% |

Example 2 according to the present invention

A mixture of 78.0 wt.% deionized water, 15.27 wt.% Vulcan XC72, 5.0 wt.% PVP K-12, 1.2 wt.% BYK-024, 0.3 wt.% Surfynol 104E, 0.01 wt.% JMAX LP 10 (preservative), 0.12 wt.% ammonia solution 25% and 0.1 wt.% Natrosol 250 GR was added to a jar containing pebbles as milling media. The closed jar was placed on a roller bench and rolled for 16 hours. Afterwards, the homogenous intermediate 2 was transferred in a separate container without the milling media. 77.5 wt.% of the intermediate 2 and 22.5 wt.% of Joncryl FLX 5201 was mixed with a propellor mixer at 400 rpm for 15 minutes to form an electrically conductive composition 2.

The electrically conductive composition 2 was applied with a bar coater onto an untreated PET substrate and dried for 5 minutes at 100°C inside a box oven. The dry layer had a thickness of 13 $\mu$m and a calculated sheet resistance of 7 Ohm$_{sq}$/mil. The track resistance of an area of 1 $\times$ 5 cm (width x length) was measured before and after placing 5 droplets (0.2 g) of tap water on to the centre of the track. The water had good wettability on the conductive layer without getting absorbed. The results are listed in table 5 below.

Table 5

|  | Initial | After 30 seconds | After 60 seconds | After 300 seconds |
|---|---|---|---|---|
| Track resistance (Ohm) | 135 | 228 | 235 | 242 |
| Track resistance increase | - | 69% | 74% | 79% |

The electrically conductive composition 2 was spray coated onto a 1.9 mm thick non-woven polypropylene substrate and dried for 5 minutes at 100°C in a box oven, resulting in a dry coating weight of 56 g/m². The track resistance of an area of 1 $\times$ 5 cm (width x length) was measured before and after placing 5 droplets (0.2 g) of tap water on to the centre of the track. Within few seconds the water was fully absorbed by the substrate through the conductive layer. The results are listed in table 6 below.

Table 6

|  | Initial | After 30 seconds | After 60 seconds | After 300 seconds |
|---|---|---|---|---|
| Track resistance (Ohm) | 1870 | 4200 | 4200 | 4200 |
| Track resistance increase | - | 125% | 125% | 125% |

The electrically conductive composition 2 was spray coated onto a 1.9 mm thick non-woven polypropylene substrate and dried for 5 minutes at 100°C in a box oven, resulting in a dry coating weight of 70 g/m². The track resistance of an area of 1 $\times$ 5 cm (width x length) is measured before and after placing 5 droplets (0.2 g) of tap water on to the centre of the track. Within few seconds the water is fully absorbed by the substrate through the conductive layer. The results are listed in table 7 below.

Table 7

|  | Initial | After 30 seconds | After 60 seconds | After 300 seconds |
|---|---|---|---|---|
| Track resistance (Ohm) | 736 | 1650 | 1650 | 1650 |
| Track resistance increase |  | 124% | 124% | 124% |

Example 3 according to the present invention

A mixture of 78.0 wt.% deionized water, 15.27 wt.% Vulcan XC72, 5.0 wt.% PVP K-12, 1.2 wt.% BYK-024, 0.3 wt.% Surfynol 104E, 0.01 wt.% JMAX LP 10, 0.12 wt.% ammonia solution (25%) and 0.1 wt.% Natrosol 250 GR was added to a jar containing pebbles as milling media. The closed jar was placed on a roller bench and rolled for 16 hours. Afterwards, the homogenous intermediate 3 was transferred in a separate container without the milling media. 82.5 wt.% of the intermediate 3 and 17.5 wt.% of Joncryl FLX 5201 was mixed with a propellor mixer at 400 rpm for 15 minutes to form an electrically conductive composition 3.

The electrically conductive composition 3 was applied with a bar coater onto a untreated PET substrate and dried for 5 minutes at 100°C inside a box oven. The dry layer had a thickness of 13 $\mu$m and a calculated sheet resistance of 5 Ohm$_{sq}$/mil. The track resistance of an area of 1 $\times$ 5 cm (width x length) was measured before and after placing 5 droplets (0.2 g) of tap water on to the centre of the track. The water had good wettability on the conductive substrate without getting absorbed. The results are listed in table 8 below.

Table 8

|  | Intial | After 30 seconds | After 60 seconds | After 300 seconds |
|---|---|---|---|---|
| Track resistance (Ohm) | 107 | 228 | 245 | 262 |
| Track resistance increase |  | 113% | 129% | 145% |

Example 4 according to the present invention

A mixture of 78.0 wt.% deionized water, 15.27 wt.% Vulcan XC72, 5.0 wt.% PVP K-12, 1.2 wt.% BYK-024, 0.3 wt.% Surfynol 104E, 0.01 wt.% JMAX LP 10, 0.12 wt.% ammonia solution (25%) and 0.1 wt.% Natrosol 250 GR was added to a jar containing pebbles as milling media. The closed jar was placed on a roller bench and rolled for 16 hours. Afterwards, the homogenous intermediate 4 was transferred in a separate container without the milling media. 72.5 wt.% of the intermediate and 27.5 wt.% of Joncryl FLX 5201 was mixed with a propellor mixer at 400 rpm for 15 minutes to for an electrically conductive composition 4.

The electrically conductive composition 4 was applied with a bar coater onto a untreated PET substrate and dried for 5 minutes at 100°C inside a box oven. The dry layer had a thickness of 13 $\mu$m and a calculated sheet resistance of 10 $Ohm_{sq}$/mil. The track resistance of an area of $1 \times 5$ cm (width x length) was measured before and after placing 5 droplets (0.2 g) of tap water on to the centre of the track. The water had good wettability on the conductive layer without getting absorbed. The results are listed in table 9 below.

Table 9

|  | Intial | After 30 seconds | After 60 seconds | After 300 seconds |
|---|---|---|---|---|
| Track resistance (Ohm) | 188 | 355 | 364 | 375 |
| Track resistance increase |  | 89% | 94% | 99% |

Example 5 according to the present invention

A mixture of 78.0 wt.% deionized water, 15.27 wt.% Vulcan XC72, 5.0 wt.% PVP K-12, 1.2 wt.% BYK-024, 0.3 wt.% Surfynol 104E, 0.01 wt.% JMAX LP 10, 0.12 wt.% ammonia solution (25%) and 0.1 wt.% Natrosol 250 GR was added to a jar containing pebbles as milling media. The closed jar was placed on a roller bench and rolled for 16 hours. Afterwards, the homogenous intermediate 5 was transferred in a separate container without the milling media. 77.7 wt.% of the intermediate 5 and 22.3 wt.% of different polyurethane-based dispersion (PUD) was mixed with a propellor mixer at 400 rpm for 15 minutes to form electrically conductive compositions 5-8.

The electrically conductive compositions 5-8 each were applied with a bar coater onto a untreated PET substrate and dried for 5 minutes at 100°C inside a box oven. The dry layers had a thickness of 17 $\mu$m. The track resistance of an area of $1 \times 5$ cm (width x length) was measured before and after placing 5 droplets (0.2 g) of tap water on to the centre of the track. It was shown that the better the wettability of water on the conductive layer was, bigger the increase in resistance was. The results are listed in table 10 below.

Table 10

| Used PUD binder | Resistance increase after 30 seconds | Resistance increase after 60 seconds | Resistance increase after 300 seconds |
|---|---|---|---|
| Joncryl FLX 5201 - electrically conductive composition 5 | 33% | 35% | 37% |
| Liopur PFL 1154 - electrically conductive composition 6 | 17% | 18% | 20% |
| Liopur PFL 2392 - electrically conductive composition 7 | 11% | 11% | 12% |
| Liopur PKS 2845 - electrically conductive composition 8 | 155% | 202% | 243% |

**Claims**

1. An electrically conductive composition comprising

   a) carbon black;
   b) a water-soluble thermoplastic polymer;
   c) a polyurethane polymer water dispersion having polyurethane polymer content from 35 to 45 wt.%;
   d) a defoamer;
   e) a rheology modifier;
   f) a preservative; and
   g) water.

2. The electrically conductive composition according to claim 1, wherein carbon black is present in a quantity from 5 to 25% by weight of the total weight of the composition, preferably from 7 to 20% and more preferably from 8 to 15%.

3. The electrically conductive composition according to claim 1 or 2, wherein the water-soluble thermoplastic polymer is selected from the group consisting of polyethylene oxide (PEO), polyvinyl pyrrolidone (PVP), polyvinyl alcohol (PVA), polyacrylamide (PAM), polyethylene glycol (PEG), polyacrylic acid (PAA), and mixtures thereof, preferably wherein the water-soluble thermoplastic polymer is polyvinyl pyrrolidone (PVP).

4. The electrically conductive composition according to any one of claims 1 to 3, wherein the water-soluble thermoplastic polymer is present in a quantity from 1 to 10% by weight of the total weight of the composition, preferably from 1.5 to 8% and more preferably from 2 to 6%.

5. The electrically conductive composition according to any one of claims 1 to 4, wherein the polyurethane polymer is selected from the group consisting of an aromatic polyether polyurethane, an aliphatic polyether polyurethane, an aromatic polyester polyurethane, an aliphatic polyester polyurethane, an aromatic polycaprolactam polyurethane, an aliphatic polycaprolactam polyurethane, an aliphatic polyester-polycarbonate polyurethane, a vinyl-urethane hybrid polymer, an acrylic-urethane hybrid polymer, and mixtures thereof, preferably the polyurethane polymer is an aliphatic polyether polyurethane.

6. The electrically conductive composition according to any one of claims 1 to 5, wherein the polyurethane polymer water dispersion is present in a quantity from 5 to 50% by weight of the total weight of the composition, preferably from 10 to 40%, and more preferably from 12 to 30%.

7. The electrically conductive composition according to any one of claims 1 to 6, wherein the defoamer is selected from the group consisting of 2,4,7,9-tetramethyl-5-decin-4,7-diol, polydimethylsiloxane, modified polydimethylsiloxane, mineral oil based defoamer, native oil based defoamer, white oil and non-ionic surfactants based defoamer, and mixtures thereof.

8. The electrically conductive composition according to any one of claims 1 to 7, wherein the defoamer is present in a quantity from 0.1 to 3% by weight of the total weight of the composition, preferably from 0.25 to 2%, and more preferably from 0.5 to 1.75%.

9. The electrically conductive composition according to any one of claims 1 to 8, wherein the rheology modifier is selected from the group consisting of, hydroxyethyl cellulose (HEC), hydroxypropyl cellulose (HPC), hydroxyethyl methylcellulose (HEMC), hydroxypropyl methyl cellulose (HPMC), methyl cellulose (MC), ethyl cellulose (EC), and mixtures thereof, preferably the rheology modifier is hydroxyethyl cellulose (HEC).

10. The electrically conductive composition according to any one of claims 1 to 9, wherein the rheology modifier is present in a quantity from 0.01 to 0.5% by weight of the total weight of the composition, preferably from 0.02 to 0.2% and more preferably from 0.05 to 0.15%.

11. The electrically conductive composition according to any one of claims 1 to 10, wherein the preservative is selected from the group consisting of 1,2-benzisothiazolin-3-one, 1,2-benzisothiazolin-3-one sodium salt, 2-methyl-2H-isothiazol-3-one, 5-chlor-2-methyl-2H-isothiazol-3-on, 5-chloro-2-methyl-1,2-thiazol-3(2H)-one, tris(hydroxymethyl)nitromethane, o-phenylphenol, o-phenylphenol sodium salt, dimethoxane, didecyldimethyl ammonium chloride, 2-brom-2-nitro-1,3-propandiol, 1,2-butanediol, 1,2-ocatanediol, 1,2-heptanediol, AgCl on TiO2, NaOPP / NaBIT, and mixtures thereof.

12. The electrically conductive composition according to any one of claims 1 to 11, wherein the preservative is present in a quantity from 0.001 to 0.5% by weight based on the total weight of the composition, preferably from 0.01 to 0.4% and more preferably from 0.02 to 0.3%

13. The electrically conductive composition according to any one of claims 1 to 12, wherein water is present from 40 to 80% by weight of the total weight of the composition, preferably from 45 to 75%, and more preferably from 50 to 70%.

14. A dry film formed from the electrically conductive composition according to any one of claims 1 to 13.

15. A conductive substrate comprising

   a) the electrically conductive composition according to any one of claims 1 to 13; and
   b) a substrate,

wherein the electrically conductive composition applied on to a surface of the substrate, wherein the substrate is preferably selected from the group consisting of a plastic, a woven geotextile fabric, a non-woven geotextile fabric, a knitted fabric, a laid fabric and a woven tape.

16. A moisture sensor and/or water leak detection system comprising the conductive substrate according to claim 15.

Europäisches
Patentamt
European
Patent Office
Office européen
des brevets

# EUROPEAN SEARCH REPORT

**Application Number**

EP 24 20 4100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 353 547 A (DONGGUAN ASD NEW MATERIALS CO [CN]) 28 January 2009 (2009-01-28) | 1-8, 10-15 | INV. H01B1/24 C08K3/04 |
| A | * examples 1,3,5 * | 9,16 | C08L75/04 C09D5/24 |
| X | US 2022/244612 A1 (SARVI ALI [US] ET AL) 4 August 2022 (2022-08-04) | 1-8, 10-15 | |
| A | * examples 33-38 * | 9,16 | |
| X | CN 101 955 706 A (LINGCONG LIU) 26 January 2011 (2011-01-26) | 1-15 | |
| A | * claim 1; examples 1,2 * | 16 | |
| A | US 2024/117203 A1 (TATHE DIPAK [IN] ET AL) 11 April 2024 (2024-04-11) * claim 1; example 1 * | 1-16 | |

**TECHNICAL FIELDS SEARCHED (IPC)**

H01B
C08K
C08L
C09G
C09D

The present search report has been drawn up for all claims

| Place of search | Date of completion of the search | Examiner |
|---|---|---|
| The Hague | 12 March 2025 | Pötzsch, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4100

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | | | Publication date | Patent family member(s) | | Publication date |
|---|---|---|---|---|---|---|
| CN 101353547 | A | | 28-01-2009 | NONE | | |
| US 2022244612 | A1 | | 04-08-2022 | AU | 2022215571 A1 | 06-07-2023 |
| | | | | CA | 3206989 A1 | 11-08-2022 |
| | | | | CN | 116830032 A | 29-09-2023 |
| | | | | EP | 4288835 A1 | 13-12-2023 |
| | | | | JP | 7562872 B2 | 07-10-2024 |
| | | | | JP | 2024149723 A | 18-10-2024 |
| | | | | JP | 2024505889 A | 08-02-2024 |
| | | | | KR | 20230133386 A | 19-09-2023 |
| | | | | TW | 202239851 A | 16-10-2022 |
| | | | | US | 2022244612 A1 | 04-08-2022 |
| | | | | WO | 2022169920 A1 | 11-08-2022 |
| CN 101955706 | A | | 26-01-2011 | NONE | | |
| US 2024117203 | A1 | | 11-04-2024 | CN | 117642471 A | 01-03-2024 |
| | | | | EP | 4367188 A1 | 15-05-2024 |
| | | | | JP | 2024529296 A | 06-08-2024 |
| | | | | TW | 202307143 A | 16-02-2023 |
| | | | | US | 2024117203 A1 | 11-04-2024 |
| | | | | WO | 2023280538 A1 | 12-01-2023 |

EPO FORM P0459

For more details about this annex : see Official Journal of the European Patent Office, No. 12/82